# EUROPÄISCHE PATENTSCHRIFT

(11) **EP 1 050 704 B1**
(45) Veröffentlichungstag und Bekanntmachung des Hinweises auf die Patenterteilung: **30.11.2005**
(21) Anmeldenummer: 00108938.2
(22) Anmeldetag: 27.04.2000
(51) Int. Cl.: F16L 3/12

(54) **Rohrschelle**
Pipe clamp
Collier de serrage

(30) Priorität: 07.05.1999 DE 19921046
(43) Veröffentlichungstag der Anmeldung: 08.11.2000
(73) Patentinhaber: Mefa Befestigungs- und Montagesysteme GmbH, 74635 Kupferzell (DE)
(72) Erfinder: Schmidt, Alexander, 74653 Künzelsau (DE); Schneider, Martin, 74613 Öhringen (DE)
(74) Vertreter: Schuster, Gregor

(56) Entgegenhaltungen:
- EP-A- 0 534 518
- DE-A- 4 213 864
- DE-C- 4 431 692
- DE-U- 8 806 714
- DE-U- 29 704 512

## Beschreibung

### Stand der Technik

Die Erfindung geht aus von einer Rohrschelle nach der Gattung des Hauptanspruchs. Bei einer bekannten Rohrschelle der gattungsgemäßen Art (DE 297 04 512.1U) wird ein Rohrschellenkörper auf ein Rohr montiert, indem am Schellenkörper angeformte, gegenüberliegende Spannstege miteinander verschraubt werden, was zu einer Durchmesserreduzierung der Rohrschelle und zu einem festen Umschließen des Rohres führt. In den Schellenkörper ist hierzu ein Spannelement in Form eines U-förmigen Bügels eingesetzt, in dessen Muttergewinde eine Schraube eingedreht wird und dabei die gegenüberliegenden Spannstege des Schellenkörpers aufeinander zu bewegt werden, bis die Schelle fest geschlossen ist.

Das Spannelement in Gestalt des U-förmigen Bügels ist relativ lose am Schellenkörper angeordnet, wobei die Bügelarme von der Schelleninnenseite her durch Ausnehmungen im Schellenkörper durchgeführt sind, so dass der Bügel die Schellenwand hintergreift und sich mit seinen Armen über den jeweiligen Spannsteg erstreckt. Der Bügel selbst wird durch ein federelastisches Rückstellglied, beispielsweise einem Gummiring, in seiner Lage fixiert. Gegenüber anderen bekannten Ausführungen kann zwar mit dieser Rohrschelle die allgemeine Handhabung wesentlich vereinfacht werden, weil ein federelastischer Gummiring den Bügel auf Grund seiner Rückstellkraft auf den Spannsteg drückt. Trotzdem ist das Eindrehen der Spannschraube nicht unproblematisch, weil sich das Muttergewinde des Bügels nicht immer in schraubgerechter Position befindet. Oftmals sind auch die Montagestellen am Rohr schlecht zugänglich, was das Eindrehen der Schraube in den Bügel zusätzlich erschwert.

Ein weiteres Problem dieser bekannten Rohrschelle ergibt sich beim Aufsetzen der Schelle auf das Rohr. Der U-förmige Bügel muss vor dem Aufsetzen der Rohrschelle auf das adaptierende Rohr in den Schellenkörper eingesetzt werden, weil die Länge der Bügelarme ein nachträgliches Einsetzen nicht erlaubt. Beim Aufweiten des Schellenkörpers, um diesen auf das Rohr aufzuschieben, kann der bereits im Schellenkörper eingesetzte Bügel aus den Ausnehmungen der Schellenwand herausfallen, weil der Gummiring den Bügel nicht in dessen axialer Richtung sichert. Danach muss der Anwender die Rohrschellenteile weiter mit einer Hand festhalten, während er mit der anderen Hand einen neuen Bügel einsetzt.

### Die Erfindung und ihre Vorteile

Die erfindungsgemäße Rohrschelle mit den kennzeichnenden Merkmalen des Hauptanspruchs hat demgegenüber den Vorteil, dass das Spannelement mit der Schraube vormontiert und in einen bereits auf dem Rohr befindlichen Schellenkörper eingehängt werden kann. Hierzu muss der Schellenkörper nur geringfügig aufgeweitet werden. Dies vereinfacht die Handhabung entscheidend. Der Vorteil wird vor allem erzielt, indem der federelastische Ring oberhalb des Spannstegs in einer zwischen Haken und Spannschraube gebildeten Aufnahmekammer durchgeführt ist und unterhalb des Spannstegs die Spannschraube umläuft. Durch diese Schlaufenbildung wird nicht nur das Spannelement fixiert, sondern auch der Schraube eine Vorspannung verliehen.

Nach einer vorteilhaften Ausgestaltung der Erfindung ist das freie Ende des Hakens von der Spannschraube unter Bildung eines Spaltes beabstandet. Dadurch kann einerseits die Spannschraube frei und ungehindert verfahren, andererseits kann die Spaltgröße so gewählt werden, dass der Gummiring hier auch nachträglich einpreßbar ist. Falls nötig kann die Schraube so weit aus dem Muttergewinde herausgedreht werden, dass sich eine ausreichende Öffnung zwischen Schraube und Haken ergibt. In der Montageendstellung der Rohrschelle ist der Spalt so gering, dass ein selbsttätiges Herausfallen des eingesetzten Gummirings nicht möglich ist. Trotzdem kann die Spannschraube frei drehen.

Nach einer weiteren vorteilhaften Ausgestaltung der Erfindung besteht der Haken des Spannelementes aus einer etwa halbkreisförmigen Umlenkung mit einem das freie Ende des Hakens bildenden und zu seinem Plattenteil annähernd parallel verlaufenden Steg. Ein solches Spannelement ist relativ einfach durch Biegetechnik herzustellen. Insbesondere dadurch, daß das Hakenende vom freien Ende des parallel verlaufenden Plattenabschnittes zurück versetzt und bis hinter das Muttergewinde beabstandet ist, kann die so frei liegende Platte zum Zwecke der Anfertigung des Muttergewindes ungehindert mit einem Bohrwerkzeug bearbeitet werden. Die relativ geringe Hakenlänge ist letztendlich dafür entscheidend, das die Schelle zum Zwecke des Einhakens des Spannelementes in den Schellenkörper nur geringfügig aufgeweitet werden muß.

Nach einer weiteren vorteilhaften Ausgestaltung der Erfindung ist das Spannelement aus einem eigensteifen Material beschaffen. Damit ist das Spannelement gegenüber den wirkenden Zug- und Biegekräften keiner Formänderung unterworfen. Als Material bietet sich hier insbesondere ein Stahlblech mit einer Stärke an, die für das einzuschneidende Muttergewinde genügend Fläche für dessen Gewindegänge bietet.

Nach einer weiteren vorteilhaften Ausgestaltung der Erfindung sind die Ausnehmungen im Schellenkörper durch einen Rückhaltesteg voneinander getrennt, wobei der Haken mit seiner Umlenkung den Rückhaltesteg des Schellenkörpers hintergreift. Dadurch ist das Spannelement einerseits einfach zu sichern und andererseits ebenso einfach auszuhängen.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im folgenden näher beschrieben. Es zeigen:
- Figur 1: einen Halbschnitt der Rohrschelle mit leicht aufgeweiteten Schellendurchmesser
- Figur 2: die vorgespannte Rohrschelle im Halbschnitt

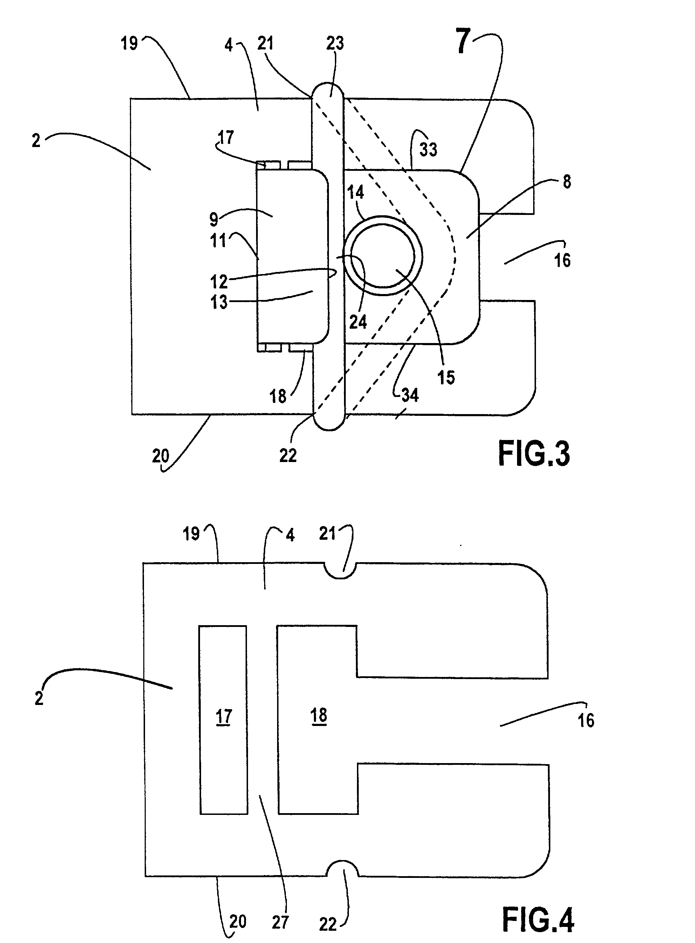

- Figur 3: eine Draufsicht auf die Rohrschelle aus der in Figur 2 angedeuteten Richtung III
- Figur 4: eine Draufsicht auf einen Spannsteg des Schellenkörpers

### Beschreibung des Ausführungsbeispiels

Die Rohrschelle ist in ihrer Gesamtheit mit 1 bezeichnet. Diese besteht aus einem Schellenkörper 2, von dem ein Halbschnitt von etwa 180° dargestellt ist. Die freien Enden sind radial nach außen gebogen und bilden jeweils einen Spannsteg 3,4 zwischen denen eine Öffnung 5 ausgebildet ist. In den Schellenkörper 2 ist ein Spannelement 7 eingehängt, das aus einer Platte 8 besteht, deren dem Schellenkörper 2 nahes Ende als Haken 9 ausgebildet ist. Der Haken 9 als solcher besteht aus einer etwa halbkreisförmigen Umlenkung 11 an der sich zum freien Ende 12 hin, ein zur Platte 8 etwa parallel verlaufender Steg 13 erstreckt. Der Steg 13 ragt dabei nur soweit zurück in Richtung der Spannschraube 15, daß das freie Ende 12 des Hakens 9 von der Spannschraube 15 unter Beibehaltung eines Spaltes 24 mit ihrem Gewindeschaft 31 beabstandet ist. Zwischen der Spannschraube 15, die in das die Platte 8 durchsetzende Muttergewinde 14 eingreift, und dem Haken 9 ist eine Aufnahmekammer 25 ausgebildet, durch die das Rückstellglied 23 teilweise durchgeführt wird.

Die mit 3 und 4 bezeichneten Spannstege sind an ihren freien Enden mit einem nach außen offenen Einschnitt 16 versehen, wobei zumindest der mit dem Spannelement 7 adaptierte Spannsteg 4 und der sich daran anschließende Schellenkörper 2 von zwei Ausnehmungen 17,18 durchbrochen ist. Der Einschnitt 16 geht dabei in die Ausnehmung 18 über, so daß hier eine etwa T-förmige Durchbrechung gebildet ist. Die Ausnehmungen 17 und 18 sind durch einen Rückhaltesteg 27 von einander getrennt. Die Randseiten 19,20 des Spannsteges 4 sind mit etwa halbkreisförmigen Kerben 21,22 versehen, die annähernd dem halben Querschnitt des verwendeten federelastischen Rückstellgliedes 23 entsprechen. Das federelastische Rückstellglied 23 ist in diesem Ausführungsbeispiel ein Gummiring, mit dem das Spannelement 7 und somit auch die Spannschraube 15 in einer relativ gesicherten Lage gegenüber dem Schellenkörper 2 bzw. dem Spannsteg 4 fixierbar ist.

Bei der dargestellten vormontierten Rohrschelle ist das Spannelement 7 mit seinem Haken 9 durch die Ausnehmungen 17,18 im Schellenkörper 2 durchgeführt, so daß die Umlenkung 11 den die Ausnehmungen 17,18 trennenden Rückhaltesteg 27 des Schellenkörpers 2 hintergreift. Die Umlenkung 11 befindet sich innerhalb der Rohrschelle, während der am Hakenende angeformte Steg 13 zur Schellenaußenseite hin austritt.

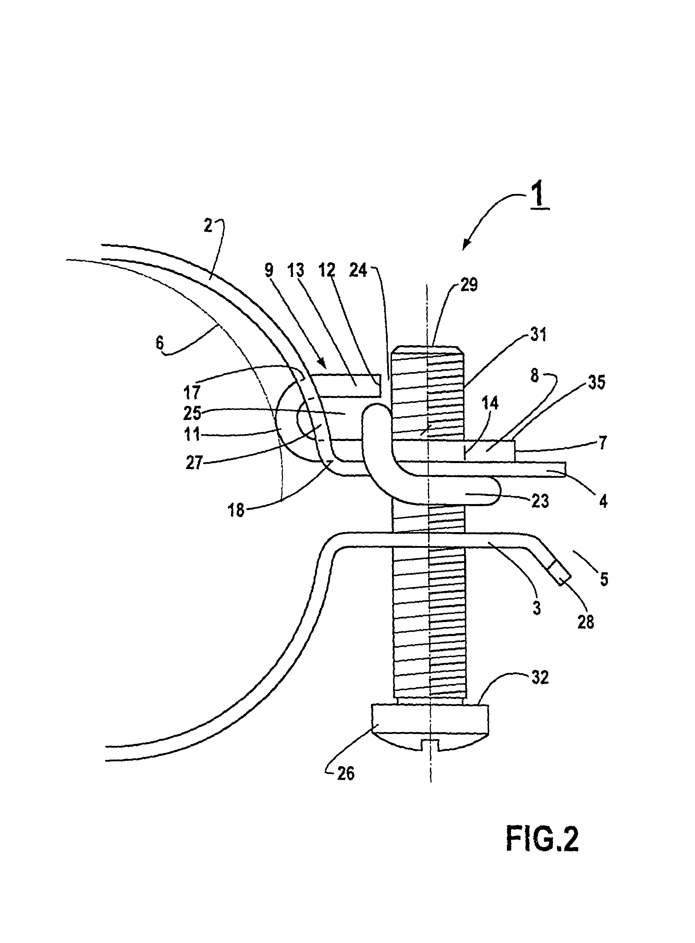

Das Rückstellglied 23 ist so eingesetzt, daß es in der zwischen Haken 9 und Spannschraube 15 gebildeten Aufnahmekammer 25 durchführt und unterhalb des Spannsteges 4 etwa parallel zu diesem umgelegt ist, so daß es die Spannschraube 15 schlaufenförmig einschließt. Hierzu ist die Aufnahmekammer 25 an den Spannelementflanken 33,34 offen. Das Rückstellglied 23 tritt hier beidseits des Hakens 9 aus und führt über die Kerben 21,22 in den Randseiten 19,20 des Spannsteges 4. Dabei ist das Rückstellglied 23 bereits in der in Figur 2 dargestellten Position auf Zug belastet, so daß dies zu einer Vorspannung von Spannelement 7 und Spannschraube 15 führt. Durch weiteres Eindrehen der Spannschraube 15 in das Muttergewinde 14 der Platte 8 werden die Spannstege 3,4 weiter zusammengeführt, der Innendurchmesser der Rohrschelle 2 somit reduziert und das Rohr 6 fest umschlossen.

Nachfolgend wird nun die Funktion der erfindungsgemäßen Rohrschelle während deren Montage geschildert.

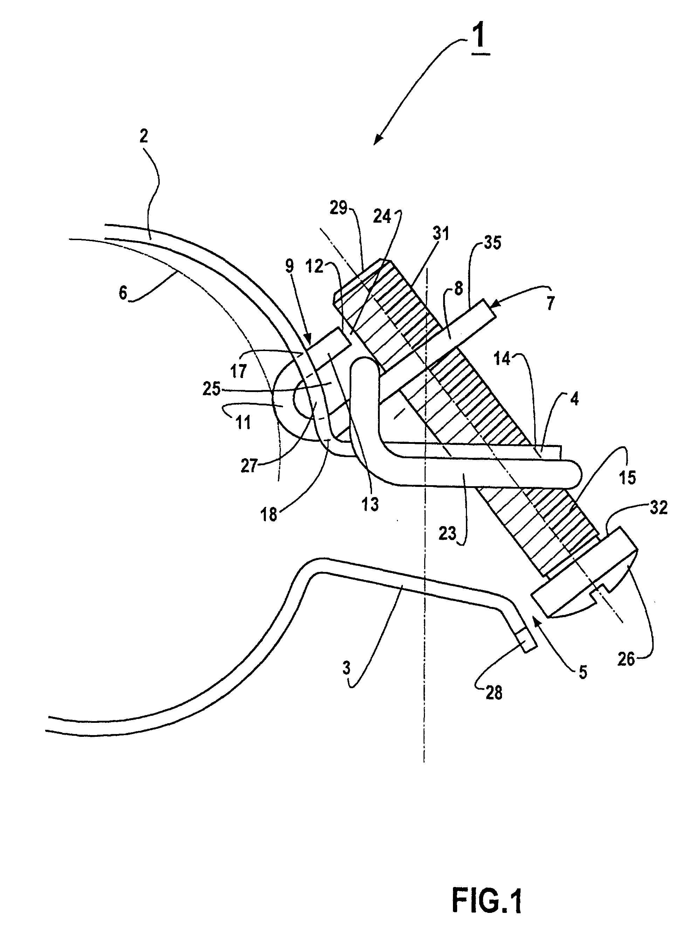

Die Figur 1 zeigt dabei einen Halbschnitt der Rohrschelle 1 in ihrer Grundstellung. Die Rohrschelle 1 kann sowohl als geschlossenes Band als auch offen ausgebildet sein, wobei dann auf beiden gegenüberliegenden Schellenseiten Spannelemente adaptiert sind. Die Schellenmontage kann mit am Schellenkörper 2 vormontierten Spannelement 7, Schraube 15 und Rückstellglied 23 oder auch durch nachträgliches Einhängen des mit Schraube 15 und gegebenenfalls mit Rückstellglied 23 vormontierten Spannelement 7 erfolgen. Zunächst wird die Montage der mit Spannelement 7 vormontierten Rohrschelle 1 geschildert.

Durch Spreizen des Schellenkörpers 2 wird die Öffnung 5 soweit vergrößert, daß der Schellenkörper 2 um das mit 6 bezeichnete Rohr gelegt werden kann. Wird eine zweiteilige Rohrschelle mit geringer Spreizbarkeit verwendet, werden gegebenenfalls beide Schellenhälften zuvor gelöst, um dann das Rohr 6 zu umschließen. Schon jetzt kann der Schraubenkopf 26 hinter den Spannsteg 3 gedrängt werden, wodurch der Schellenkörper 2 mit geringer Kraft auf dem Rohr 6 anliegt. Der Schellenkörper 2 wird durch Heranziehen beider Spannstege 3,4 geschlossen, wobei der Spannsteg 3 durch Andrücken auf den benachbarten Spannsteg 4 zubewegt wird. Am freien Ende trägt der Spannsteg 3 eine Schürze 28, die die Aufgabe hat als Abweiser auf die Spannschraube 15 zu wirken und diese aus ihrer annähernd rechtwinkligen Stellung zum Spannsteg 4 in eine Kippstellung abzudrängen. Dabei dehnt sich das Rückstellglied 23 und wirkt mit seiner Zugkraft sowohl auf das Spannelement 7 als auch auf die Spannschraube 15. Sobald die Schürze 28 den Schraubenkopf 2 passiert hat, kann die Spannschraube 15 in den auch im Spannsteg 3 befindlichen Einschnitt 16 eingeführt werden, so daß der Schraubenkopf 26 mit seinen Schultern 32 den Spannsteg 3 hintergreift. Bei diesen Montageschritten bleibt sowohl das Spannelement 7 als auch die Spannschraube 15 unter dem Krafteinfluss des federelastischen Rückstellgliedes 23, so daß beide Teile selbsttätig in die in Figur 2 dargestellte Position zurücksetzen. Danach werden die Spannschrauben 15 fest angezogen, so daß die Rohrschelle 1 das Rohr 6 sicher und unverrückbar umschließt.

Stört das Spannelement 7 und die Spannschraube 15 beim Umlegen der Rohrschelle 1 um ein Rohr 6, dies ist häufig bei sehr beengten Rohrleitungsstrecken der Fall, so kann die erfindungsgemäße Rohrschelle 1 zunächst alleine um das Rohr 6 gelegt werden. Bei einer einteiligen, relativ elastischen Rohrschelle muß diese nur entsprechend dem Rohrquerschnitt aufgeweitet werden. Bei einer zweiteiligen Rohrschelle werden beide Schellenhälften um das Rohr 6 gelegt, und zumindest eine Spannstegseite verschraubt. Insbesondere bei sehr engen Rohrleitungsführungen könnte eine bereits auf der anderen Schellenseite eingesetzte vormontierte Spannschraube 15 die Handhabung sehr erschweren. Wenn die Spannschraube 15 der einen Seite leicht angezogen ist, kann nun das vormontierte Spannelement 7 mit seinem Haken 9 in den Schellenkörper 2 eingehängt werden, ohne daß die Schelle nochmals stark aufzuweiten wäre. Auch das mühevolle Suchen und Ertasten des Muttergewindes 14 entfällt, da das Spannelement 7 bereits mit der Spannschraube 15 vormontiert ist. Dabei ist die Spannschraube 15 nur so weit in das Spannelement 7 eingedreht, daß diese mit ihrer Stirnfläche 29 nur knapp über die Oberseite 35 der Platte 8 ausragt und der Haken 9 noch behinderungsfrei in die Ausnehmung 17, 18 des Schellenkörpers 2 eingeführt werden kann, um den Rückhaltesteg 27 im Schellenkörper 2 zu hintergreifen.

## Patentansprüche

1. Rohrschelle (1)
- mit einem ein Rohr (6) umgebenden Schellenkörper (2), der zumindest an einer Stelle seines Umfanges zum Zwecke des Aufsetzens auf das Rohr geöffnet ist, wobei im Bereich seiner Öffnung (5) die freien Enden des Schellenkörpers (2) radial nach außen ausragen und jeweils einen Spannsteg (3, 4) bilden und die Spannstege (3, 4) zum Zwecke der Schellenmontage aufeinander zubewegbar sind und zur Schellendurchmesserreduzierung führen,
- wobei mindestens ein Spannsteg (3) einen nach außen offenen Einschnitt (16) besitzt, in den eine Spannschraube (15) einführbar ist, welche den Spannsteg (3) mit ihrem Kopf (26) hintergreift, während der Gewindeschaft (31) der Spannschraube (15) den benachbarten Spannsteg (4) durchsetzt und in ein ein Muttergewinde (14) aufweisendes Spannelement (7) eingreift, welches den Schellenkörper (2) im Bereich von Ausnehmungen (17, 18) hintergreift und welches am Schellenkörper (2) relativ lose und beweglich angeordnet ist,
- wobei das Spannelement (7) mit einem federelastischen Ring (23) in seiner Lage auf dem Spannsteg (4) am Schellenkörper (2) fixiert ist und
- wobei das Spannelement (7) aus einer Platte (8) besteht, die an ihrem dem Schellenkörper (2) nahen Ende einen Haken (9) trägt,
**dadurch gekennzeichnet,**
- **dass** der federelastische Ring (23) oberhalb des Spannstegs (4) in einer zwischen Haken (9) und Spannschraube (15) gebildeten Aufnahmekammer (25) durchgeführt ist und unterhalb des Spannstegs (4) die Spannschraube (15) umläuft.

2. Rohrschelle nach Anspruch 1, **dadurch gekennzeichnet, dass** das freie Ende (12) des Hakens (9) von der Spannschraube (15) unter Bildung eines Spaltes (24) beabstandet ist.

3. Rohrschelle nach einem der vorhergehenden Ansprüche, **dadurch gekennzeichnet, dass** die zwischen Haken (9) und Spannschraube (15) gebildete Aufnahmekammer (25) zu den Spannelementflanken (33, 34) hin offen ausgebildet ist.

4. Rohrschelle nach einem der vorhergehenden Ansprüche, **dadurch gekennzeichnet, dass** der Haken (9) aus einer etwa halbkreisförmigen Umlenkung (11) mit einem das freie Ende (12) des Hakens (9) bildenden und zur Platte (8) annähernd parallel verlaufenden Steg (13) besteht.

5. Rohrschelle nach einem der vorhergehenden Ansprüche, **dadurch gekennzeichnet, dass** das Spannelement (7) aus einem eigensteifen Material beschaffen ist.

6. Rohrschelle nach einem der vorhergehenden Ansprüche, **dadurch gekennzeichnet, dass** die Ausnehmungen (17, 18) im Schellenkörper (2) durch einen Rückhaltesteg (27) voneinander getrennt sind.

7. Rohrschelle nach einem der vorhergehenden Ansprüche, **dadurch gekennzeichnet, dass** der Haken (9) mit seiner Umlenkung (11) den Rückhaltesteg (27) des Schellenkörpers (2) hintergreift.

## Claims

1. A pipe clamp (1),
- comprising a clamp body (2) surrounding a pipe (6) which is open at least at one point of its circumference for the purpose of placing on the pipe, wherein in the region of its opening (5) the free ends of the clamp body (2) project radially outwards and each form a clamping cross-piece (3, 4) and the clamping cross-pieces (3, 4) are moveable towards one another for the purpose of assembling the clamp and lead to a reduction of the clamp diameter,
- wherein at least one clamping cross-piece (3) has an outwardly open notch (16) in which a tightening screw (15) can be inserted, which grips behind the clamping cross-piece (3) with its head (26) whilst the threaded shank (31) of the tightening screw (15) penetrates the neighbouring clamping cross-piece (4) and engages in a clamping element (7) having a female screw thread (14) which grips behind the clamp body (2) in the area of recesses (17, 18) and which is arranged relatively loosely and movably on the clamp body (2),
- wherein the clamping element (7) is fixed with a spring-elastic ring .(23) in its position on the clamping cross-piece (4) on the clamp body (2) and
- wherein the clamping element (7) consists of a plate (8) which has a hook (9) at its end near the clamp body (2), .
**characterised in**
- that the spring-elastic ring (23) is guided above the clamping cross-piece (4) in a receiving chamber (25) formed between hook (9) and tightening screw (15) and goes around the tightening screw (15) below the clamping cross-piece (4).

2. The pipe clamp according to claim 1, **characterised in that** the free end (12) of the hook (9) is at a distance from the tightening screw (15) forming a gap (24).

3. The pipe clamp according to any one of the preceding claims, **characterised in that** the receiving chamber (25) formed between hook (9) and tightening screw (15) is constructed as open towards the clamping element flanks (33, 34).

4. The pipe clamp according to any one of the preceding claims, **characterised in that** the hook (9) consists of an approximately semicircular deflection (11) with a cross-piece (13) forming the free end (12) of the hook (9) and running approximately parallel to the plate (8).

5. The pipe clamp according to any one of the preceding claims, **characterised in that** the clamping element (7) is made of an inherently rigid material.

6. The pipe clamp according to any one of the preceding claims, **characterised in that** the recesses (17, 18) in the clamp body (2) are separated from one another by a retaining cross-piece (27).

7. The pipe clamp according to any one of the preceding claims, **characterised in that** the hook (9) with its deflection (11) grips behind the retaining cross-piece (27) of the clamp body (2).

## Revendications

1. Collier de serrage pour tuyau (1)
- comprenant un corps de collier (2) ouvert au moins en un point de sa périphérie pour sa mise en place sur le tuyau, entourant un tuyau (6), les extrémités libres du corps de collier (2) dépassant vers l'extérieur dans la direction radiale dans la zone de son ouverture (5) et formant chacune une ailette de serrage (3, 4), et les ailettes de serrage (3, 4) pouvant être rapprochées l'une de l'autre pour le montage du collier et entraînant la réduction du diamètre du collier,
- au moins une ailette de serrage (3) possédant une encoche (16) ouverte vers l'extérieur, dans laquelle peut être introduite une vis de serrage (15) qui saisit l'ailette de serrage (3) par derrière au moyen de sa tête (26), pendant que le filetage (31) de la vis de serrage (15) traverse l'ailette de serrage (4) voisine et s'engage dans un élément de serrage (7), présentant un taraudage (14), qui saisit le corps du collier de serrage (2) par derrière dans la zone d'évidements (17, 18) et qui est disposé de manière relativement lâche et mobile sur le corps du collier de serrage (2),
- l'élément de serrage (7) étant immobilisé dans sa position sur l'ailette de serrage (4) sur le corps du collier de serrage (2) à l'aide d'un anneau élastique (23) et
- l'élément de serrage (7) se composant d'une plaque (8) portant un crochet (9) à son extrémité proche du corps du collier de serrage (2),
**caractérisé en ce que**
- l'anneau élastique (23) passe, au-dessus de l'ailette de serrage (4), dans un logement (25) formé entre le crochet (9) et la vis de serrage (15) et entoure la vis de serrage (15) en dessous de l'ailette de serrage (4).

2. Collier de serrage pour tuyau selon la revendication 1, **caractérisé en ce que** l'extrémité libre (12) du crochet (9) se situe à distance de la vis de serrage (15), en formant une fente (24).

3. Collier de serrage pour tuyau selon l'une des revendications précédentes, **caractérisé en ce que** le logement (25) formé entre le crochet (9) et la vis de serrage (15) a une forme ouverte en direction des flancs (33, 34) de l'élément de serrage.

4. Collier de serrage pour tuyau selon l'une des revendications précédentes, **caractérisé en ce que** le crochet (9) se compose d'un coude (11) de forme sensiblement semi-circulaire avec une arête (13) formant l'extrémité libre (12) du crochet (9) et s'étendant de manière sensiblement parallèle à la plaque (8).

5. Collier de serrage pour tuyau selon l'une des revendications précédentes, **caractérisé en ce que** l'élément de serrage (7) est réalisé dans une matière rigide intrinsèquement.

6. Collier de serrage pour tuyau selon l'une des revendications précédentes, **caractérisé en ce que** les évidements (17, 18) dans le corps du collier de serrage (2) sont séparés l'un de l'autre par une arête de retenue (27).

7. Collier de serrage pour tuyau selon l'une des revendications précédentes, **caractérisé en ce que** le crochet (9) saisit l'arête de retenue (27) du corps du collier de serrage (2) par l'arrière à l'aide de son coude (11).
